# EUROPEAN PATENT SPECIFICATION

(11) **EP 3 621 887 B1**
(45) Date of publication and mention of the grant of the patent: **07.02.2024**
(21) Application number: 18799188.0
(22) Date of filing: 09.05.2018
(51) Int. Cl.: B65D 8/00, B65D 81/20, B65D 1/02, B65D 85/72, A23L 3/02, B65D 1/44, B65D 79/00, B65D 1/42

(54) **HOT FILL CONTAINER WITH WAVY GROOVE**
HEISSFÜLLBEHÄLTER MIT WELLKERBUNG
CONTENANT DE REMPLISSAGE À CHAUD À RAINURE ONDULÉE

(30) Priority: 10.05.2017 US 201762504087 P
(43) Date of publication of application: 18.03.2020
(73) Proprietor: The Coca-Cola Company, Atlanta, GA 30313 (US)
(72) Inventor: KLOK, Jeffrey, Atlanta Georgia 30313 (US); STEWARD, Sterling Lane, Douglasville Georgia 30135 (US); GOVINDARAJAN, Venkat, Duluth Georgia 30097 (US); SHI, Feng, Marietta Georgia 30066 (US)
(74) Representative: Dehns
(86) International application number: PCT/US2018/031788
(87) International publication number: WO 2018/208906

(56) References cited:
- EP-A1- 2 813 437
- EP-A2- 2 084 071
- WO-A1-2009/135046
- JP-A- 2016 159 941
- US-A1- 2003 015 491
- US-A1- 2006 289 378
- US-A1- 2007 125 743
- US-A1- 2010 006 580

## Description

### TECHNICAL FIELD

The present application and the resultant patent relate generally to beverage containers and more particularly relate to lightweight beverage bottles with groove and panel structures providing increased rigidity for accommodating the forces typically associated with hot fill processes in a highly aesthetic design.

### BACKGROUND OF THE INVENTION

Beverages such as sport drinks, juices, teas, waters, and the like are often bottled via hot fill processes so as to prevent microbial growth. The hot fill processes generally involve pasteurizing the beverage at about 95 degrees Celsius for about 20 seconds, cooling the beverage to about 85 degrees Celsius, and then filling the bottles with the beverage. The 85 degree temperature generally is sufficient to sterilize the bottles. A closure is then applied to the bottle to create a sealed container. The bottle then may be passed through a cooling tunnel after filling and capping to be cooled via a water spray or other methods. The final temperature of the beverage after the cooling process generally may be less than about 40 degrees Celsius. Other types of hot fill processes may be known using different times, temperatures, and equipment. Different types of beverages also may necessitate different types of bottling techniques.

During the cooling process, the beverage may contract such that a vacuum forms within the enclosed container. To help offset the impact of such a vacuum, bottles used in the hot fill processes generally have special vacuum panels formed therein. These vacuum panels and the areas therebetween generally promote a controlled deformation or deflection so as to accommodate the forces created by the vacuum while maintaining the overall integrity of the bottle. These hot filled bottles generally require relatively complex shapes and may use significantly more thermoplastic material as compared to cold filled bottles and the like. As a result, hot fill bottles may be more expensive to produce in terms of both tooling and material and also may offer less design freedom. A prior art container according to the preamble of independent claim 1 is known from WO 2009/135046 A1.

There is thus a desire for improved hot fill containers and methods of filling the same. Such improved containers may accommodate the contraction of a beverage therein while maintaining the overall integrity of the container without the complexity, the weight, and the costs typically associated with hot fill containers and the like.

### SUMMARY OF THE INVENTION

The present application and the resultant patent thus provide a container for a beverage filled in a hot fill process in accordance with independent claim 1.

The present application and the resultant patent further provide a method of bottling a hot liquid in accordance with independent claim 15.

Preferred embodiments are defined in the dependent claims.

These and other features and improvements of the present application and the resultant patent will become apparent to one of ordinary skill in the art upon review of the following detailed description when taken in conjunction with the several drawings and the appended claims.

### BRIEF DESCRIPTION OF THE DRAWINGS

Fig. 1 is a perspective view of a hot fill container as may be described herein.
Fig. 2 is a front plan view of the hot fill container of Fig. 1.
Fig. 3 is a side plan view of the hot fill container of Fig. 1
Fig. 4 is a top plan view of the hot fill container of Fig. 1.
Fig. 5 is a bottom plan view of the hot fill container of Fig. 1.
Fig. 6 is a sectional view of the hot fill container of Fig. 3 taken along line 6-6.
Fig. 7 is a sectional view of the hot fill container of Fig. 3 taken along line 7-7.

### DETAILED DESCRIPTION

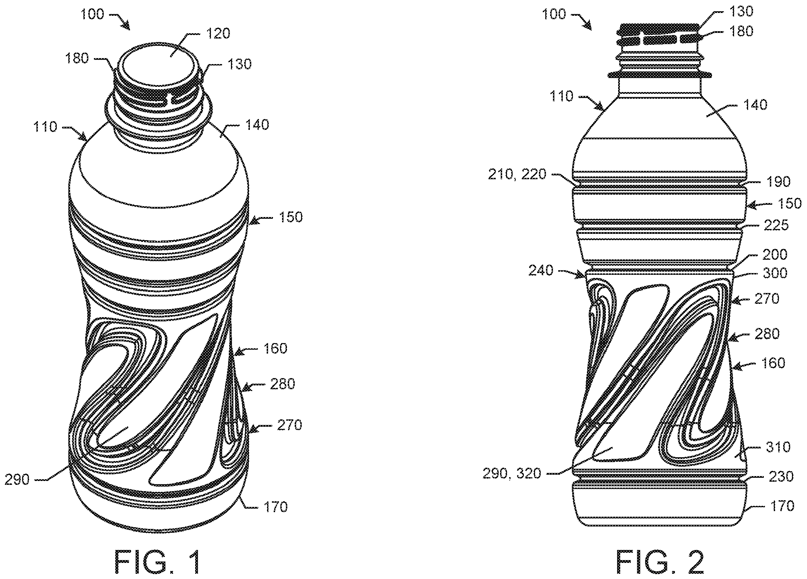

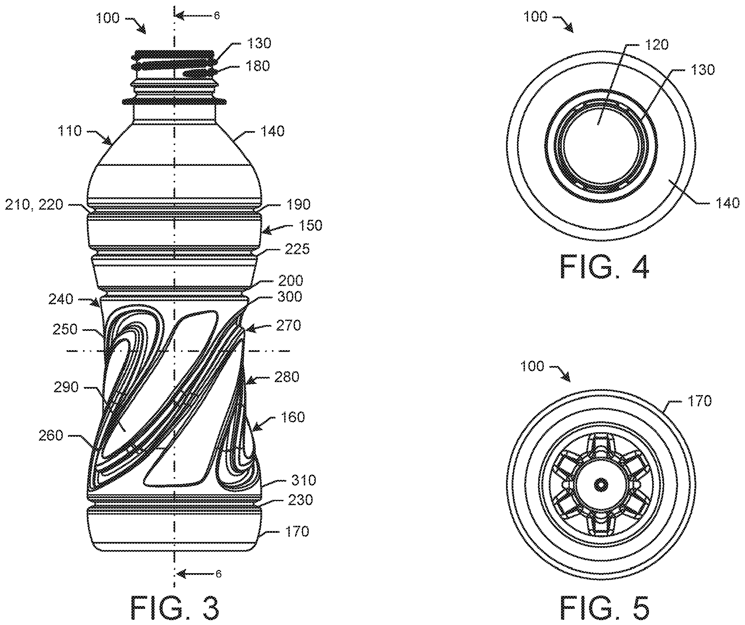

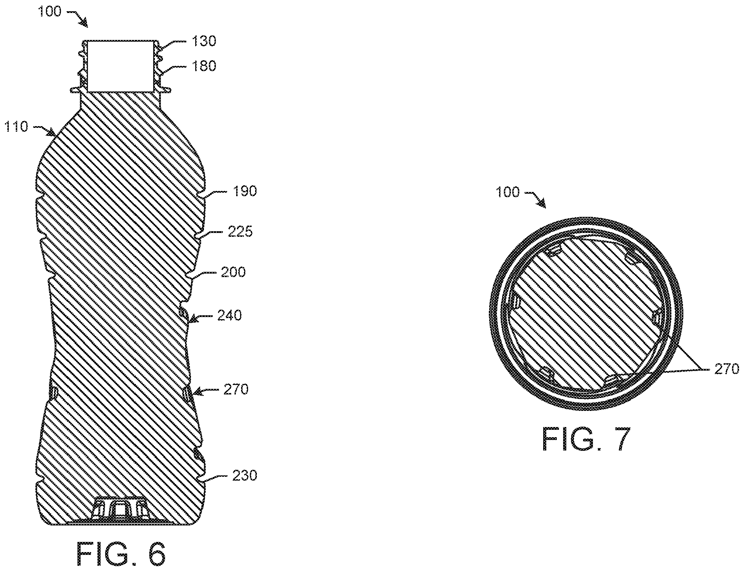

Referring now to the drawings in which like numerals refer to like elements throughout the several views, Figs. 1-7 show a container 100 as may be described herein. The container 100 may be in the shape of a bottle 110 and the like. The bottle 110 may have any suitable size, shape, or configuration. The bottle 110 may be made from an injection molded preform. The preform may be made from various types of polymer resins. These polymer resins may include polyesters, polyolefins, polypropylene, polycarbonates, nitrates, and copolymers thereof. Biaxially oriented polyethylene terephthalate ("PET") may be commonly used. Other materials such as polylactide acid ("PLA") and the like also may be used herein. The polymers may be clear or opaque. Other types of materials may be used herein.

Generally described, the bottle 110 may include an open mouth 120, a finish 130, a shoulder 140, an upper section 150, a lower section 160, and a base 170 in any desired size, shape, or configuration. The open mouth 120 and the finish 130 may be largely of conventional design. The finish 130 may have one or more threads 180 thereon. The finish 130 and the threads 180 may be sized to accommodate a closure (not shown) thereon. The closure may be largely of conventional design. The shoulder 140 may be largely dome like in shape and may expand in diameter from the finish 130 downward to the upper section 150. The size, shape, and configuration of the shoulder 140 may vary.

The upper section 150 may extend from the shoulder 140 to the lower section 160. The upper section 150 may be separated from the shoulder 140 by an upper circumferential groove 190. The upper section 150 may be separated from the lower section 160 by a middle circumferential groove 200. The grooves 190, 200 may be in the form of an indentation 210 within a sidewall 220 of the bottle 110. The size, shape, and configuration of the grooves 190, 200 and the indentations 210 may vary. The upper section 150 may have one or more upper section circumferential grooves 230 formed therein. Although only one upper section circumferential groove 225 is shown, any number may be used herein in any suitable size, shape, or configuration. The upper section 150 may have a slightly reduced diameter in the direction from the upper circumferential groove 190 to the middle circumferential groove 200. Other components and other configurations may be used herein.

The lower section 160 may extend from the upper section 150 to the base 170. The lower section 160 may be separated from the upper section 150 by the middle circumferential groove 200. The lower section 160 may be separated from the base 170 by a lower circumferential groove 230. The size, shape, and configuration of the lower circumferential groove 230 may vary. The lower section 160 may have a somewhat "hour glass" like configuration 240 with an upper area of decreasing diameter 250 and a lower area of increasing diameter 260. The nature of the hour glass like configuration 240 may vary.

The lower section 160 has at least one wavy groove 270 therein. The wavy groove 270 may extend in an angled configuration from the lower circumferential groove 230 to the middle circumferential groove 200 in a repeating fashion 205. Although three (3) repeats 205 are shown, any number may be used herein. In this example, one wavy groove 270 is shown in a continuous loop 280 around the entire lower section 160. Any number of the wavy grooves 270 may be used herein in continuous or non-continuation fashion. The wavy groove 270 also is an indentation 210 into the sidewall 220 of the bottle 110. The depth and width of the indentation 210 of the wavy groove 270 may vary.

Each of the repeats 205 of the wavy groove 270 extends across the lower section 160 in a substantially "Z-like" shape 280. By the term "Z-like" shape 280, we mean that a vertical line along the length of the lower section 160, *i.e.*, in the direction of a longitudinal axis of the bottle 110, would intercept the wavy groove 270 twice or three times. The wavy groove 270 and the substantially "Z-like" shape 280 define a number of tongue panels 290 therebetween in the sidewall 220 of the bottle 110. Specifically, the "Z-like" shape 280 of the wavy groove 270 forms the panels 290 in the shape of a tongue therebetween. Given the use of a single, continuous wavy groove 270, the wavy groove 270 may bisect a first continuous tongue panel 300 and a second continuous tongue panel 310. Moreover, the tongue panels 290 may have a varied contoured shape 320 that may vary along the length thereof. The size, shape, and configuration of the wavy groove 270 and the tongue panels 290 may vary. Other components and other configurations may be used herein.

The base 170 may extend from the lower section 160. The base 170 may be separated from the lower section 160 by the lower circumferential groove 230. The base 170 may be of conventional design and may have any suitable size, shape, or configuration. The base 170 may be similar in design to those generally used in cold fill processes.

The bottle 110 herein may be intended for a beverage size of about 250 milliliters with the use of a standard 28 millimeter finish 130 and a standard base 170. The bottle 110 may have an overall height of about 167 millimeters or so. The bottle 110, and the features thereof, however, may be sized up or down as may be desired. At the 250 milliliter size, the bottle 110 may use about 15 grams or less of a PET material or other types of thermoplastics. The indentation 210 of the wavy groove 270 may extend about 3.3 to about 3.7 millimeters or so within the sidewall 220 of the bottle 110. The current example may be about 3.5 millimeters. The depth of the indentation 210 may vary.

In use, the bottle 110 may be filled in a conventional hot fill process and capped with a closure in a conventional capping station. As the beverage within the bottle 110 cools, the beverage will contract and begin to pull a vacuum therein. As opposed to a conventional hot fill container that may be designed to accommodate the vacuum by deforming about the base, the bottle 110 herein has improved rigidity given the use of the wavy groove 270 and the tongue panels 290 in the lower section 160. The wavy groove 270 and the tongue panels 290 allow limited bending and flexing so as to absorb the vacuum while maintaining the integrity and shape of the bottle 110. The use of the Z-like shape 280 also may allow a controlled amount of twisting to accommodate further the vacuum therein. If the total surface area under the neck ring is about 26,426 square millimeters and the surface area of the lower section 160 is about 11,461 square millimeters, than the overall ratio of the flexing lower section 160 to the bottle 110 as a whole may be about 43.3 percent. The reduction in diameter of the lower section 160 may be less than about 1.5% or so. Moreover, the upper section 150 provides a comfortable grip with improved hoop strength and improved top loading. A label or other type of wrapper may be affixed to the bottle 110 in whole or in part in a conventional manner.

Significantly, the use of the wavy groove 270, the Z-like shape 280, and the tongue panels 290 provides such rigidity with a reduced amount of material. Even at the 250 milliliter size, conventional hot fill bottles may require additional material, particularly if the bottle accommodates the vacuum through the base. The reduced amount of material thus provides a significant cost savings in a hot fill bottle. The bottle 110 herein thus may be ultra-light but with improved rigidity. Given the use of less than about 15 grams of material for a 250 milliliter bottle, the ratio of material to size thus may be about one (1) to seventeen (17) or less.

It should be apparent that the foregoing relates only to certain embodiments of the present application and the resultant patent. Numerous changes and modifications may be made herein by one of ordinary skill in the art without departing from the scope of the invention as defined by the following claims.

## Claims

1. A container (100) for a beverage filled in a hot fill process, comprising:
an upper section (150); and
a lower section (160);
the lower section (160) comprising a wavy groove (270) defining a plurality of tongue panels (290);
wherein the wavy groove (270) comprises a substantial Z-like shape (280), **characterized in that** the Z-like shape is such that a vertical line along a length of the lower section (100) would intercept the wavy groove (270) twice or three times.

2. The container (100) of claim 1, further comprising a dome and wherein the dome is separated from the upper section (150) by an upper circumferential groove (190).

3. The container (100) of claim 1, wherein the upper section (150) and the lower section (160) are separated by a middle circumferential groove (200).

4. The container (100) of claim 1, wherein the upper section (150) comprises an upper section circumferential groove (225) therein.

5. The container (100) of claim 1, further comprising a base (170) and wherein the base (170) is separated from the lower section (160) by a lower circumferential groove (230).

6. The container (100) of claim 1, wherein the lower section (160) comprises a substantial hour glass configuration (240) in the form of an upper decreasing diameter area and a lower increasing diameter area.

7. The container (100) of claim 1, wherein the wavy groove (270) comprises a continuous wavy groove extending around the lower section (160).

8. The container (100) of claim 1, wherein the wavy groove (270) comprises a plurality of repeats (205)

9. The container (100) of claim 1, wherein the wavy groove (270) bisects a first tongue panel (300) and a second tongue pane (310)

10. The container (100) of claim 1, wherein the plurality of tongue panels (290) comprises a contoured shape (320).

11. The container (100) of claim 1, wherein the container (100) comprises a 250 milliliter bottle.

12. The container (100) of claim 1, further comprising less than about 15 grams of a thermoplastic.

13. The container (100) of claim 1, wherein a ratio of material in terms of weight in grams to size in terms of volume in millilitres comprises about one (1) to seventeen (17) or less.

14. The container (100) of claim 1, wherein the lower section (160) comprises about forty percent (40%) or more of the container.

15. A method of filling a container (100) with a hot liquid, comprising:
positioning a wavy groove (270) and a plurality of tongue panels (290) along a section of the container (100), wherein the wavy groove (270) comprises a substantial Z-like shape (280) such that a vertical line along a length of the section would intercept the wavy groove (270) twice or three times;
filling the container (100) with the hot liquid;
cooling the container (100);
forming a vacuum within the container (100); and
flexing the container (100) about the wavy groove (270) and the plurality of tongue panels (290).

## Patentansprüche

1. Behälter (100) für ein Getränk, eingefüllt in einem Heißfüllprozess, umfassend:
einen oberen Bereich (150); und
einen unteren Bereich (160);
wobei der untere Bereich (160) eine Wellkerbung (270), die eine Vielzahl von Zungenfeldern (290) definiert, umfasst;
wobei die Wellkerbung (270) eine im Wesentlichen Z-ähnliche Form (280) umfasst, **dadurch gekennzeichnet, dass** die Z-ähnliche Form so ist, dass eine vertikale Linie entlang einer Länge des unteren Bereichs (160) die Wellkerbung (270) zwei- oder dreimal schneiden würde.

2. Behälter (100) nach Anspruch 1, ferner umfassend einen Dom, wobei der Dom vom oberen Bereich (150) durch eine obere umlaufende Kerbung (190) getrennt ist.

3. Behälter (100) nach Anspruch 1, wobei der obere Bereich (150) und der untere Bereich (160) durch eine mittlere umlaufende Kerbung (200) getrennt sind.

4. Behälter (100) nach Anspruch 1, wobei der obere Bereich (150) eine umlaufende Kerbung (225) im oberen Bereich umfasst.

5. Behälter (100) nach Anspruch 1, ferner umfassend eine Basis (170), wobei die Basis (170) vom unteren Bereich (160) durch eine untere umlaufende Kerbung (230) getrennt ist.

6. Behälter (100) nach Anspruch 1, wobei der untere Bereich (160) im Wesentlichen eine Sanduhrkonfiguration (240) in der Form eines oberen Bereichs mit sich verkleinerndem Durchmesser und eines unteren Bereichs mit sich vergrößerndem Durchmesser umfasst.

7. Behälter (100) nach Anspruch 1, wobei die Wellkerbung (270) eine kontinuierliche Wellkerbung, die sich um den unteren Bereich (160) erstreckt, umfasst.

8. Behälter (100) nach Anspruch 1, wobei die Wellkerbung (270) eine Vielzahl von Wiederholungen (205) umfasst.

9. Behälter (100) nach Anspruch 1, wobei die Wellkerbung (270) ein erstes Zungenfeld (300) und ein zweites Zungenfeld (310) zweiteilt.

10. Behälter (100) nach Anspruch 1, wobei die Vielzahl von Zungenfeldern (290) eine konturierte Form (320) umfasst.

11. Behälter (100) nach Anspruch 1, wobei der Behälter (100) eine 250-Milliliter-Flasche umfasst.

12. Behälter (100) nach Anspruch 1, ferner umfassend weniger als etwa 15 Gramm eines Thermoplasts.

13. Behälter (100) nach Anspruch 1, wobei ein Verhältnis von Material hinsichtlich des Gewichts in Gramm zur Größe hinsichtlich des Volumens in Millilitern etwa eins (1) zu siebzehn (17) oder weniger umfasst.

14. Behälter (100) nach Anspruch 1, wobei der untere Bereich (160) etwa vierzig Prozent (40 %) oder mehr des Behälters umfasst.

15. Verfahren zum Füllen eines Behälters (100) mit einer heißen Flüssigkeit, umfassend:
Positionieren einer Wellkerbung (270) und einer Vielzahl von Zungenfeldern (290) entlang eines Abschnitts des Behälters (100), wobei die Wellkerbung (270) eine im Wesentlichen Z-ähnliche Form (280) umfasst, sodass eine vertikale Linie entlang einer Länge des Bereichs die Wellkerbung (270) zwei- oder dreimal schneiden würde;
Füllen des Behälters (100) mit der heißen Flüssigkeit;
Kühlen des Behälters (100);
Ausbilden eines Vakuums innerhalb des Behälters (100); und
Biegen des Behälters (100) um die Wellkerbung (270) und die Vielzahl von Zungenfeldern (290).

## Revendications

1. Récipient (100) pour une boisson rempli par un procédé de remplissage à chaud, comprenant :
une section supérieure (150) ; et
une section inférieure (160) ;
la section inférieure (160) comprenant une rainure ondulée (270) définissant une pluralité de panneaux formant des languettes (290) ;
la rainure ondulée (270) présentant sensiblement une forme en Z (280), **caractérisé en ce que**
la forme en Z est telle qu'une ligne verticale le long d'une longueur de la section inférieure (160) croiserait la rainure ondulée (270) deux ou trois fois.

2. Récipient (100) selon la revendication 1, comprenant, en outre, un dôme et dans lequel le dôme est séparé de la section supérieure (150) par une rainure circonférentielle supérieure (190).

3. Récipient (100) selon la revendication 1, dans lequel la section supérieure (150) et la section inférieure (160) sont séparées par une rainure circonférentielle médiane (200).

4. Récipient (100) selon la revendication 1, dans lequel la section supérieure (150) comprend une rainure circonférentielle de section supérieure (225) dans celle-ci .

5. Récipient (100) selon la revendication 1, comprenant, en outre, une base (170) et dans lequel la base (170) est séparée de la section inférieure (160) par une rainure circonférentielle inférieure (230).

6. Récipient (100) selon la revendication 1, dans lequel la section inférieure (160) présente sensiblement une configuration en sablier (240) sous la forme d'une région supérieure à diamètre décroissant et d'une région inférieure à diamètre croissant.

7. Récipient (100) selon la revendication 1, dans lequel la rainure ondulée (270) est une rainure ondulée continue s'étendant autour de la section inférieure (160) .

8. Récipient (100) selon la revendication 1, dans lequel la rainure ondulée (270) comprend une pluralité de répétitions (205).

9. Récipient (100) selon la revendication 1, dans lequel la rainure ondulée (270) divise un premier panneau formant des languettes (300) et un deuxième panneau formant des languettes (310).

10. Récipient (100) selon la revendication 1, dans lequel la pluralité de panneaux formant des languettes (290) présentent une forme profilée (320).

11. Récipient (100) selon la revendication 1, le récipient (100) étant une bouteille de 250 millilitres.

12. Récipient (100) selon la revendication 1, comprenant, en outre, moins d'environ 15 grammes d'un thermoplastique.

13. Récipient (100) selon la revendication 1, dans lequel un rapport de la matière en termes de poids en grammes à la taille en termes de volume en millilitres est d'environ un (1) à dix-sept (17) ou moins.

14. Récipient (100) selon la revendication 1, dans lequel la section inférieure (160) constitue environ quarante pour cent (40 %) ou plus du récipient.

15. Procédé de remplissage d'un récipient (100) avec un liquide chaud, comprenant :
positionner une rainure ondulée (270) et une pluralité de panneaux formant des languettes (290) le long d'une section du récipient (100), la rainure ondulée (270) présentant sensiblement une forme en Z (280) telle qu'une ligne verticale le long d'une longueur de la section croiserait la rainure ondulée (270) deux ou trois fois ;
remplir le récipient (100) avec le liquide chaud ;
refroidir le récipient (100) ;
établir un vide à l'intérieur du récipient (100) ; et
déformer le récipient (100) par flexion au niveau de la rainure ondulée (270) et de la pluralité de panneaux formant des languettes (290).
